(19) Europäisches Patentamt
European Patent Office
Office européen des brevets

(11) **EP 0 945 207 B1**

(12) **FASCICULE DE BREVET EUROPEEN**

(45) Date de publication et mention
de la délivrance du brevet:
**11.06.2003 Bulletin 2003/24**

(51) Int Cl.⁷: **B23K 9/16**, B23K 35/38

(21) Numéro de dépôt: **99400696.3**

(22) Date de dépôt: **22.03.1999**

(54) **Procédé de soudage ou de coupage plasma ou tig avec gaz non-oxydant à faible teneur en impuretés H2O et/ou O2**

Plasma-und/oder TIGschweiss -oder Schneidverfahren mit nicht oxidierendem Gas mit geringfügigen Verunreinigungen, insbesondere an H2O und/oder O2

Plasma or TIG welding or cutting method using non-oxidizing gas containing a low content of impurities, in particular H2O and/or O2

(84) Etats contractants désignés:
**BE CH DE DK ES FI FR GB GR IT LI LU NL PT SE**

(30) Priorité: **26.03.1998 FR 9803743**

(43) Date de publication de la demande:
**29.09.1999 Bulletin 1999/39**

(73) Titulaire: **L'air Liquide, S.A. à Directoire et Conseil de Surveillance pour l'Etude et l'Exploitation des Procédés Georges Claude**
**75321 Paris Cedex 07 (FR)**

(72) Inventeurs:
• **Borne, André**
**95550 Bessancourt (FR)**
• **Remy, Francis**
**95130 Franconville (FR)**

(74) Mandataire: **Pittis, Olivier et al**
**L'Air Liquide, S.A.,**
**Direction de la Propriété Intellectuelle,**
**75, Quai d'Orsay**
**75321 Paris Cedex 07 (FR)**

(56) Documents cités:
**FR-A- 2 251 153**

• **PATENT ABSTRACTS OF JAPAN vol. 18, no. 258 (M-1606), 17 mai 1994 & JP 06 039554 A (KYODO SANSO K.K.), 15 février 1994**
• **PATENT ABSTRACTS OF JAPAN vol. 15, no. 283 (M-1137), 18 juillet 1991 & JP 03 099772 A (FURUKAWA ALUM CO LTD), 24 avril 1991**

**Description**

La présente invention concerne un procédé de travail à l'arc électrique, tel un procédé de soudage plasma ou TIG, dans lequel on utilise un gaz non-oxydant contenant une proportion faible mais non-nulle d'impuretés, en particulier d'impuretés de type oxygène ($O_2$) et/ou vapeur d'eau ($H_2O$).

Dans le cadre de la présente invention, on entend par procédé de travail à l'arc électrique non seulement un procédé de soudage à l'arc, mais aussi un procédé de coupage, de marquage, de rechargement ou de projection, tels les procédés à l'arc plasma ou TIG.

Habituellement, une torche de travail à l'arc électrique, telle une torche de coupage plasma, comprend une électrode, réalisée en tout ou en partie d'un matériau émissif, laquelle électrode a une forme généralement cylindrique ou cylindro-tronconique, une tuyère disposée coaxialement par rapport à l'électrode et formant diaphragme sur le parcours de l'arc plasma, un circuit de refroidissement interne de la torche, notamment de l'électrode, et un ou plusieurs circuits de distribution de gaz plasmagène dans une chambre délimitée, d'une part, par l'électrode et son support et, d'autre part, par la partie interne de la tuyère et de son support.

En fonctionnement, l'électrode est reliée à l'un des pôles d'une source de courant, alors que la tuyère est reliée à l'autre pôle de ladite source de courant.

Après ionisation d'une partie d'un flux gazeux plasmagène, circulant entre l'extrémité inférieure de l'électrode et un canal d'éjection des gaz pratiqué au sein de la tuyère, un premier arc électrique est généré en formant ainsi une colonne de plasma d'arc prenant naissance à la base ou à proximité de ladite électrode et s'étirant au travers dudit canal de la tuyère vers l'extérieur et jusqu'au matériau à couper ou à souder par exemple.

Selon le type d'utilisation de la torche, le jet de gaz est porté à une puissance adéquate et maintenu entre l'électrode, formant cathode par exemple, et la tuyère, formant alors anode, durant toute l'opération de soudage ou coupage par exemple, ou selon le cas, le jet de gaz est transféré à la pièce à travailler, avant la montée en puissance, par rapprochement et commutation électrique; la pièce formant alors anode et la tuyère pouvant être électriquement déconnectée.

De telles torches et de tels procédés ont notamment été décrits dans les documents EP-A-599709, EP-A-573330, US-A-5597497, WO-A-96/23620, US-A-5451739, EP-A-0787556, FR-A-2669847 et FR-A-2113144.

Dans certains cas, la distribution du gaz plasmagène dans la chambre délimitée par l'électrode et la tuyère est effectuée, notamment pour des raisons techniques ou constructives, selon un plan d'injection sensiblement perpendiculaire à l'axe de l'électrode. Ainsi, l'injection du gaz dans ladite chambre peut se faire en couronne centrée sur l'axe de l'électrode, par l'intermédiaire d'une fente continue et circulaire.

Dans un autre cas de figure, l'injection du gaz dans la chambre peut être réalisée par l'intermédiaire d'une pièce ayant la forme d'une couronne au sein de laquelle sont aménagés des trous calibrés dont les axes convergent et concourent avec l'axe de l'électrode.

De manière analogue, une torche de soudage TIG comprend une électrode en tungstène généralement pointue ou affûtée; l'arc électrique de soudage s'établissant entre ladite électrode et la pièce à souder.

Il existe, toutefois, un problème n'ayant pas été résolu de manière satisfaisante jusqu'à présent, à savoir le problème d'usure ou détérioration rapide de l'électrode, lors de la mise en oeuvre de la torche à plasma ou de la torche TIG dans un procédé de soudage, coupage ou analogue.

En fait, la durée de vie d'une électrode, en particulier d'une électrode en tungstène pur ou allié, dépend de nombreux paramètres, tels la puissance de l'arc électrique, la nature et le débit du gaz, le cycle de fonctionnement de la torche.

Or, une usure rapide de l'électrode est très pénalisante du point de vue industriel, étant donné qu'elle engendre des opérations de maintenance plus fréquentes pour permettre un remplacement des pièces usées ou un réaffûtage de l'électrode dans le cas d'une torche TIG, ce qui ne peut se faire qu'après démontage de la torche et implique donc des arrêts fréquents et intempestifs de production. Le coût global du procédé de soudage s'en trouve alors également augmenté.

En outre, l'usure de l'électrode provoque, par ailleurs, une baisse notable des performances de la torche conduisant à une dégradation de la qualité du travail effectué, par exemple une altération de la qualité de la coupe obtenue.

Le document FR-A-2251153 souligne le problème d'oxydation des électrodes en tungstène et préconise, pour tenter de le résoudre, d'ajouter de 0,1 à 1% d'hydrogène à de l'argon ou de l'hélium pour obtenir un mélange gazeux plasmagène.

Par ailleurs, le document JP-A-06039554 décrit un gaz de protection pour soudage d'aciers galvanisés contenant jusqu'à 7% d'oxygène et, en outre, du dioxyde de carbone.

Le but de la présente invention est alors de résoudre les problèmes précités en proposant un procédé permettant notamment d'accroître notablement la durée de vie de l'électrode, en particulier d'une torche de coupage plasma ou d'une torché de soudage TIG.

La présente invention concerne alors un procédé de travail à l'arc électrique selon la revendication 1.

En effet, les inventeurs de la présente invention ont mis en évidence que la pureté du gaz a une influence notable sur la durée de vie de l'électrode, en particulier dans le cas d'une électrode en tungstène pur ou allié.

Ainsi, les gaz industriels, tel l'azote ou l'argon, habituellement utilisés en tant que gaz de soudage, coupage ou analogue contiennent des impuretés, notamment de type oxygène et/ou vapeur d'eau, lesquelles accélèrent la détérioration de l'électrode.

De là, un contrôle, un ajustage ou un choix judicieux de la teneur en impuretés du gaz utilisé permet de conduire à des performances améliorées, notamment une usure moins rapide de l'électrode, une augmentation de la stabilité d'arc, une diminution de l'oxydation du cordon de soudure ou des bords de coupe...

De préférence, selon l'invention, la mesure de la teneur en impuretés du gaz mis en oeuvre est effectuée à l'intérieur du corps de torche, avantageusement à proximité de l'électrode.

De préférence, le procédé selon l'invention comprend l'une ou plusieurs des caractéristiques suivantes:

- le gaz mis en oeuvre contient moins de 50 ppmv d'oxygène, de préférence moins de 25 ppmv d'oxygène, préférentiellement moins de 15 ppmv d'oxygène, avantageusement moins de 10 ppmv d'oxygène;
- le gaz mis en oeuvre contient moins de 200 ppmv de vapeur d'eau, de préférence moins de 100 ppmv de vapeur d'eau, préférentiellement moins de 50 ppmv de vapeur d'eau, avantageusement moins de 25 ppmv de vapeur d'eau;
- le gaz mis en oeuvre contient plus de 1 ppbv (partie par milliard en volume) d'oxygène, plus de 10 ppbv d'oxygène, plus de 100 ppbv d'oxygène, plus de 1 ppmv d'oxygène, plus de 3 ppmv d'oxygène ou plus de 5 ppmv d'oxygène;
- le gaz mis en oeuvre contient plus de 1 ppbv de vapeur d'eau, plus de 10 ppbv de vapeur d'eau, plus de 100 ppbv de vapeur d'eau, plus de 1 ppmv de vapeur d'eau, plus de 5 ppmv de vapeur d'eau ou plus de 10 ppmv de vapeur d'eau;
- la somme des proportions en impuretés $O_2$ et $H_2O$ dans le gaz est telle que : $[O_2] + [H_2O] \leq 450$ ppmv, de préférence $[O_2] + [H_2O] \leq 200$ ppmv, préférentiellement $[O_2] + [H_2O] \leq 80$ ppmv, de préférence $[O_2] + [H_2O] \leq 45$ ppmv avantageusement, $[O_2] + [H_2O] \leq 30$ ppmv;
- le rapport de la proportion d'oxygène à la proportion de vapeur d'eau dans le gaz est tel que :

$$0 < [O_2] / [H_2O] \leq 1/3;$$

- on utilise une torche munie d'une électrode en tungstène, en molybdène, en cuivre ou leurs alliages, c'est-à-dire un alliage contenant l'un ou plusieurs de ces métaux, de préférence en tungstène;
- le gaz non-oxydant est choisi parmi l'argon, l'azote, l'hélium, l'hydrogène ou leurs mélanges;
- il est choisi parmi les procédés de coupage plasma, projection plasma, de soudage plasma, de marquage plasma, de rechargement plasma ou de traitement thermique à l'arc plasma;
- il est choisi parmi les procédés de soudage TIG (pour Tungsten Inert Gas).

L'invention concerne également la mise en oeuvre du procédé susmentionné dans une opération de coupage plasma d'une structure en métal ou en alliage métallique, notamment une structure en acier, en aluminium ou en acier inoxydable.

Selon un autre aspect, l'invention concerne aussi un gaz plasmagène susceptible d'être utilisé dans un procédé tel que défini à la revendication 10.

L'invention va maintenant être détaillée à l'aide de d'exemples et des figures annexées, donnés à titre illustratif, mais non limitatif.

### EXEMPLES

Les essais consignés dans les exemples ci-après visent à montrer l'influence des impuretés $O_2$ et $H_2O$ sur l'usure de l'électrode d'une torche à plasma mettant en oeuvre un gaz non-oxydant contenant lesdites impuretés.

Dans tous ces exemples, le gaz non-oxydant utilisé est soit de l'azote, soit un mélange argon/hydrogène, et l'électrode utilisée est en tungstène.

**Exemple 1:** Influence des impuretés $H_2O$ avec gaz de type azote.

De l'azote artificiellement pollué par des quantités variables de vapeur d'eau ($H_2O$) est utilisé comme gaz non-oxydant pour alimenter une torche de coupage plasma.

On détermine la profondeur (en mm) du creux ou cratère d'usure apparaissant dans l'électrode en tungstène en fonction du nombre de cycles d'amorçage auxquels est soumise la torche et ce, pour différentes teneurs en impuretés $H_2O$ du gaz utilisé.

La durée totale d'un cycle d'amorçage correspond à la durée de l'amorçage proprement-dit de l'arc électrique à laquelle s'ajoute une durée de coupe de 15 secondes environ.

Dans cet exemple 1, on considère que la teneur en impuretés $O_2$ est négligeable (< 2 ppmv).

En outre, les essais aux différentes teneurs en impuretés $H_2O$ du gaz sont arrêtés lorsque la profondeur du cratère atteint environ 0,28 mm, considérée comme une profondeur maximale admissible au-delà de laquelle un remplacement de l'électrode devient obligatoire.

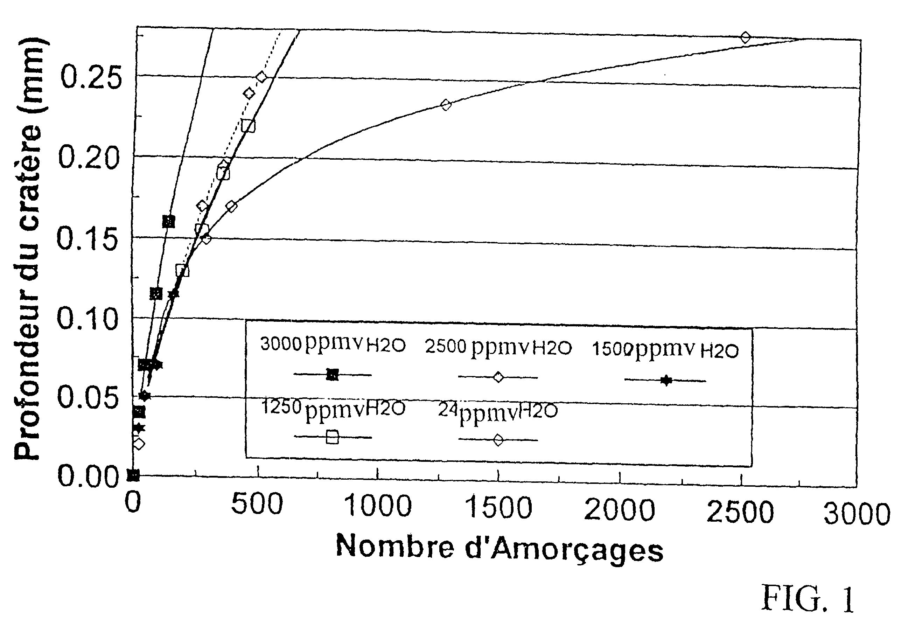

Les résultats obtenus sont représentés sur la figure 1, laquelle montre clairement que plus la concentration en impuretés $H_2O$ diminue, plus la vitesse d'usure de l'électrode diminue.

Ainsi, pour une teneur en impuretés $H_2O$ de l'azote de 3 000 ppmv (parties par millions en volume), la profondeur de 0,28 mm est atteinte après seulement 250 amorçages environ, alors que pour une teneur en impuretés $H_2O$ de 24 ppmv, la profondeur de 0,28 mm n'est atteinte qu'après 2 500 amorçages, c'est-à-dire que la durée de vie de l'électrode est multipliée par 10.

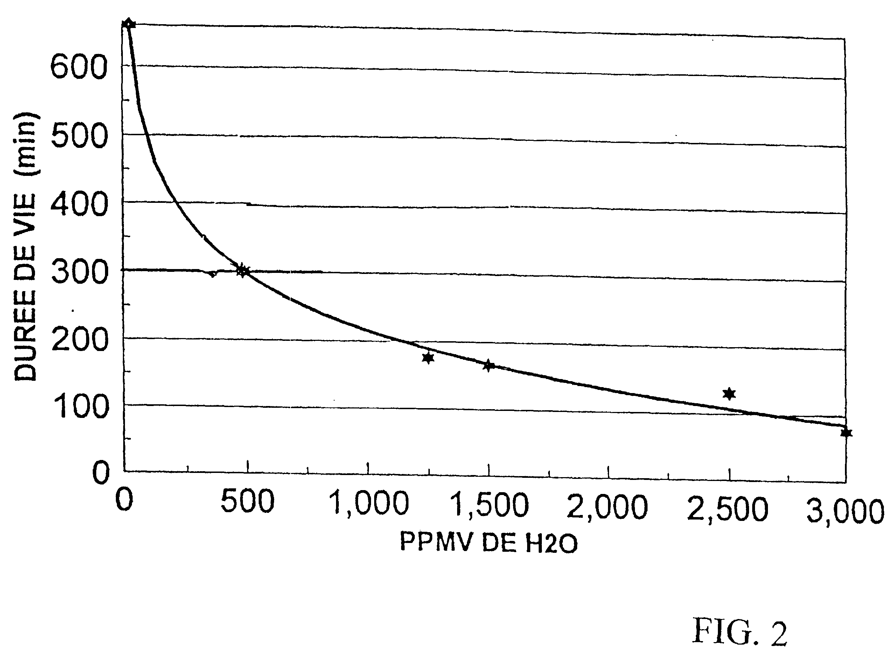

Les résultats de la figure 1 ont permis d'établir la courbe de durée de vie (en minutes) de l'électrode en tungstène en fonction de la teneur (en ppmv) en impuretés $H_2O$ de l'azote utilisé en tant que gaz plasmagène, laquelle courbe est schématisée sur la figure 2.

Il apparaît au vu de la figure 2, que pour pouvoir garantir une durée de vie de l'électrode d'au moins 5 heures pendant une opération de coupage à l'arc plasma, il convient d'utiliser un gaz non-oxydant (azote) contenant moins de 450 ppmv environ d'impuretés $H_2O$, de préférence moins de 400 ppmv environ.

**Exemple 2:** Influence des impuretés $O_2$ avec gaz non-oxydant de type azote.

Cet exemple 2 est analogue à l'exemple 1, à l'exception du fait que l'azote utilisé en tant que gaz non-oxydant est pollué, cette fois, avec des quantités variables d'impuretés de type $O_2$; la teneur en impuretés $H_2O$ étant maintenant considérée comme négligeable (< 2 ppmv $H_2O$).

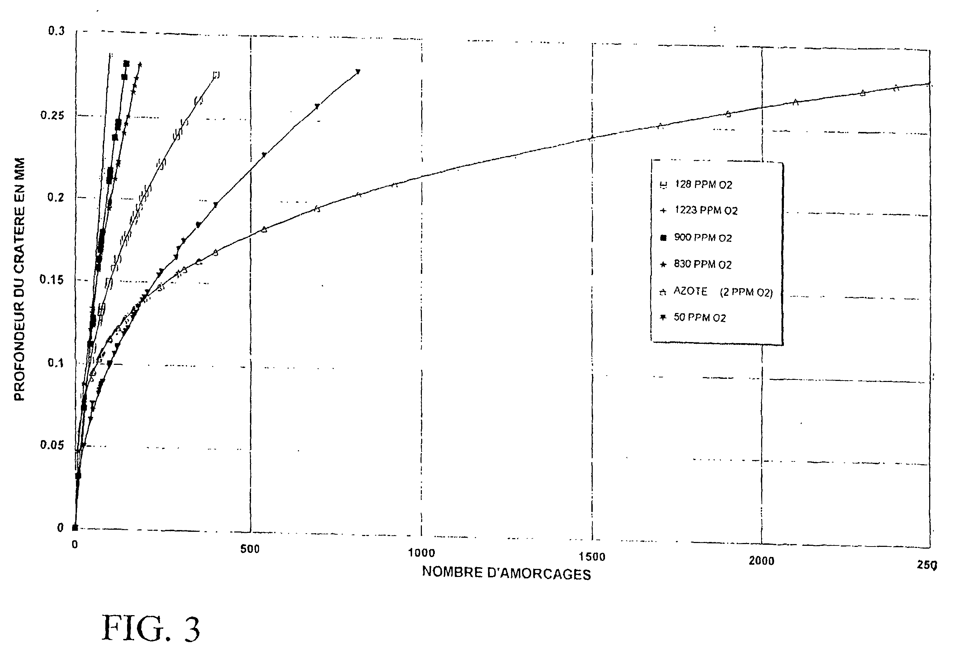

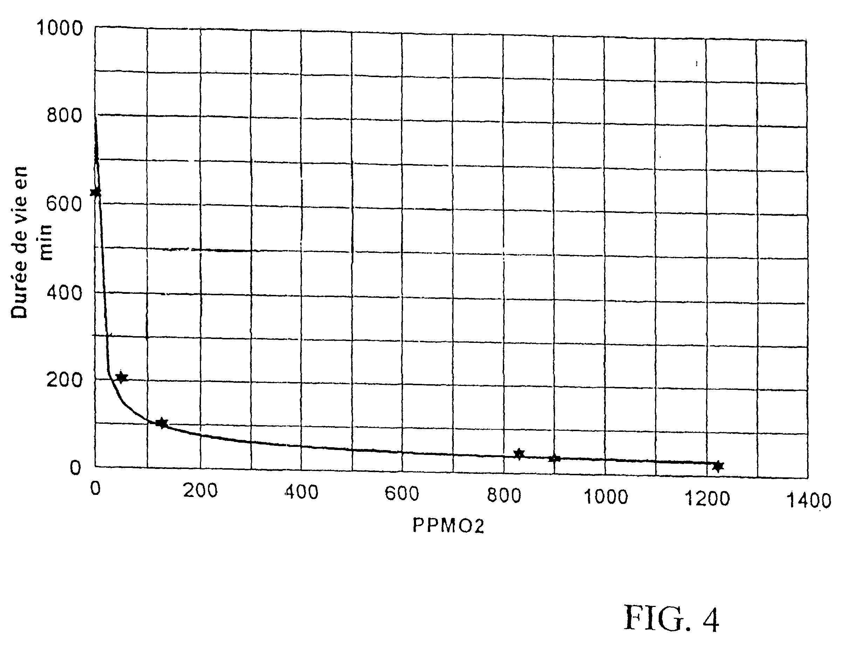

Les résultats obtenus ont été consignés sur les figures 3 et 4, qui sont analogues aux figures 1 et 2, respectivement.

Plus précisément, la figure 3 montre que plus la teneur en impuretés $O_2$ du gaz augmente, plus l'usure de l'électrode en tungstène est rapide.

En outre, la figure 4 met clairement en évidence que pour obtenir une durée de vie de l'électrode d'au moins 5 heures pendant une opération de coupage à l'arc plasma, il convient de veiller à utiliser un gaz non-oxydant contenant moins de 50 ppmv d'$O_2$ et, avantageusement, moins d'environ 15 ppmv d'impuretés $O_2$.

**Exemple 3:** Influence des impuretés $O_2$ et/ou $H_2O$ avec gaz non-oxydant de type $Ar/H_2$.

Cet exemple 3 est analogue aux exemples 1 et 2, à l'exception du gaz utilisé, lequel est un mélange d'argon et d'hydrogène ($Ar/H_2$) comprenant environ 75% de Ar et 25% de $H_2$.

On a évalué le temps de vie (en heures) de l'électrode en tungstène en présence du mélange $Ar/H_2$ et en fonction de la teneur en impuretés $O_2$ et/ou $H_2O$ dudit mélange gazeux.

Dans ce cas, pour évaluer l'usure de l'électrode, on détermine la valeur de la tension d'arc au cours du temps et on considère que l'électrode est détériorée lorsqu'on assiste à une chute de tension d'arc d'au moins 5 V.

Avant chaque démarrage ou amorçage de la torche à plasma, on purge les canalisations avec de l'azote contenant moins de 5 ppm d'impuretés $H_2O$ et $O_2$ afin d'en éliminer les éventuelles impuretés qui s'y trouvent.

Les essais sont réalisés à des débits de gaz ($Ar/H_2$) de 10 l.min$^{-1}$ et de 35 l.min$^{-1}$.

Le cycle allumage/extinction de la torche à plasma d'une durée totale d'environ 6 minutes est répété environ 24 fois.

Les résultats des essais sont consignés dans le tableau suivant.

TABLEAU

| ESSAI N° | TENEUR EN $H_2O$ (ppmv) | TENEUR EN $O_2$ (ppmv) | TEMPS DE VIE DE L'ELECTRODE (HEURES) |
|---|---|---|---|
| A | 20 | 8 | 11 |
| B | 1 000 | 8 | 4 |
| C | 40 | 8 | 19 |

TABLEAU   (suite)

| ESSAI N° | TENEUR EN $H_2O$ (ppmv) | TENEUR EN $O_2$ (ppmv) | TEMPS DE VIE DE L'ELECTRODE (HEURES) |
|---|---|---|---|
| D | 40 | 110 | 13 |
| E | 850 | 150 | 4 |

Les essais A à E confirment les observations faites aux exemples 1 et 2, à savoir que plus la teneur en impuretés $H_2O$ et $O_2$ du gaz est élevée, plus la détérioration de l'électrode est rapide.

Ainsi, au vu des essais A et B, on constate que, pour 1 000 ppmv d'impuretés $H_2O$ dans le mélange Ar/$H_2$, il se produit une chute de 60% du temps de vie de l'électrode par rapport à un mélange Ar/$H_2$ ne contenant que 20 ppmv de $H_2O$; la teneur en $O_2$ restant constante.

De même, au vu des essais C et D, on voit qu'une augmentation de 100 ppmv en impuretés $O_2$ engendre une chute de la durée de vie de l'électrode d'environ 30%; la teneur en $H_2O$ ne variant pas.

En outre, l'essai E montre que la présence simultanée d'impuretés $O_2$ et $H_2O$ en fortes proportions engendre une baisse de 80% de la durée de vie de l'électrode (par rapport à l'essai C).

Par ailleurs, après examen des autres pièces constituant la torche à plasma, il apparaît que la présence de quantités importantes d'impuretés $O_2$ et $H_2O$ (essai E par exemple) dans le flux gazeux provoque une usure prématurée notamment de la tuyère d'éjection du plasma et de l'arc électrique.

Il est à noter cependant que les différences de performances observées entre l'essai A et l'essai D s'expliquent par l'utilisation de torches à plasma différentes.

Les exemples 1 à 3 précédents illustrent clairement qu'un contrôle strict de la teneur en impuretés de type $O_2$ et $H_2O$ du gaz non-oxydant permet d'améliorer, de manière notable, le temps de vie d'une électrode d'une torche à plasma utilisant ce gaz plasmagène non-oxydant.

Bien que les essais précédents aient été réalisés au moyen d'une torche à plasma utilisée dans le cadre d'une opération de coupage plasma, les résultats obtenus sont tout à fait transposables aux procédés de soudage TIG, dans lesquels l'utilisation d'un gaz non-oxydant ayant une faible teneur en impuretés $H_2O$ et/ou $O_2$ permet d'améliorer la durée de vie de l'électrode pointue en tungstène.

En effet, une teneur élevée en impuretés $O_2$ et $H_2O$ conduit à une usure rapide de la pointe de l'électrode en tungstène et conduit alors à une instabilité importante de l'arc et à une détérioration de la qualité de la soudure réalisée, conduisant notamment à une fragilisation et/ou une oxydation du joint de soudure et/ou une sensibilisation de celui-ci à la corrosion.

Il s'ensuit alors habituellement un remplacement ou un réaffûtage plus fréquent de l'électrode en tungstène afin de garantir un soudage TIG adéquat.

Le procédé selon l'invention permet donc de pallier ces problèmes de par une introduction minimale d'agents oxydants dans le joint de soudure.

**Revendications**

**1.** Procédé de travail à l'arc électrique, dans lequel on alimente une torche avec au moins un gaz non-oxydant, ladite torche étant munie d'au moins une électrode en métal pur ou allié, **caractérisé en ce que** ledit au moins un gaz non-oxydant contient une proportion d'impuretés de type oxygène inférieure à 80 ppmv et une proportion d'impuretés de type vapeur d'eau inférieure à 400 ppmv, et **en ce que** le rapport de la proportion d'oxygène à la proportion de vapeur d'eau dans le gaz est tel que :

$$0 \leq [O_2] / [H_2O] \leq 1/3.$$

**2.** Procédé selon la revendication 1, **caractérisé en ce que** le gaz contient moins de 50 ppmv d'oxygène et moins de 200 ppmv de vapeur d'eau, de préférence moins de 15 ppmv d'oxygène et moins de 50 ppmv de vapeur d'eau.

**3.** Procédé selon l'une des revendications 1 ou 2, **caractérisé en ce que** la somme des proportions en impuretés oxygène $[O_2]$ et vapeur d'eau $[H_2O]$ dans le gaz est telle que: $[O_2] + [H_2O] \leq 450$ ppmv.

**4.** Procédé selon l'une des revendications 1 à 3, **caractérisé en ce que** la somme des proportions en impuretés oxygène $[O_2]$ et vapeur d'eau $[H_2O]$ dans le gaz est telle que: $[O_2] + [H_2O] \leq 200$ ppmv.

**5.** Procédé selon l'une des revendications 1 à 4, **caractérisé en ce qu'**on utilise une torche munie d'une électrode en tungstène, en molybdène, en cuivre ou leurs alliages.

**6.** Procédé selon l'une des revendications 1 à 5, **caractérisé en ce que** le gaz non-oxydant est choisi parmi l'argon, l'azote, l'hélium, l'hydrogène ou leurs mélanges.

**7.** Procédé selon l'une des revendications 1 à 6, **caractérisé en ce qu'**il est choisi parmi les procédés de coupage plasma, de soudage plasma, de marquage plasma, de rechargement plasma, projection plasma ou de traitement thermique à l'arc plasma.

**8.** Procédé selon l'une des revendications 1 à 6, **caractérisé en ce qu'**il est choisi parmi les procédés de soudage TIG.

**9.** Procédé selon l'une des revendications 1 à 7 comprenant une opération de coupage d'une structure en métal ou en alliage métallique, notamment une structure en acier, en acier inoxydable ou en aluminium.

**10.** Gaz non-oxydant comprenant au moins un composant choisi parmi l'argon, l'azote, l'hélium, l'hydrogène ou leurs mélanges susceptible d'être mis en oeuvre dans un procédé selon l'une des revendications 1 à 8, **caractérisé en ce qu'**il contient une proportion d'impuretés de type oxygène inférieure à 80 ppmv et une proportion d'impuretés de type vapeur d'eau inférieure à 400 ppmv, et **en ce que** le rapport de la proportion d'oxygène à la proportion de vapeur d'eau dans le gaz est tel que :

$$0 \leq [O_2] / [H_2O] \leq 1/3,$$

de préférence une proportion d'impuretés oxygène inférieure à 15 ppmv et une proportion d'impuretés vapeur d'eau inférieure à 50 ppmv.

**Patentansprüche**

**1.** Lichtbogenarbeitsverfahren, bei dem ein Brenner mit mindestens einem nicht oxidierenden Gas gespeist wird, welcher Brenner mit mindestens einer Elektrode aus reinem oder legiertem Metall versehen ist, **dadurch gekennzeichnet, dass** das mindestens eine nicht oxidierende Gas einen Anteil von Verunreinigungen des Typs Sauerstoff von weniger als 80 Vol.-ppm und einen Anteil von Verunreinigungen des Typs Wasserdampf von weniger als 400 Vol.-ppm enthält, und dass das Verhältnis des Sauerstoffanteils zum Wasserdampfanteil im Gas folgendes ist:

$$O \leq [O_2] / [H_2O] \leq 1/3.$$

**2.** Verfahren nach Anspruch 1, **dadurch gekennzeichnet, dass** das Gas weniger als 50 Vol.-ppm Sauerstoff und weniger als 200 Vol.-ppm Wasserdampf, vorzugsweise weniger als 15 Vol.-ppm Sauerstoff und weniger als 50 Vol.-ppm Wasserdampf enthält.

**3.** Verfahren nach einem der Ansprüche 1 oder 2, **dadurch gekennzeichnet, dass** die Summe der Anteile an Verunreinigungen von Sauerstoff $[O_2]$ und Wasserdampf $[H_2O]$ im Gas folgende ist: $[O_2] + [H_2O] \leq 450$ Vol.-ppm.

**4.** Verfahren nach einem der Ansprüche 1 bis 3, **dadurch gekennzeichnet, dass** die Summe der Anteile an Verunreinigungen von Sauerstoff $[O_2]$ und Wasserdampf $[H_2O]$ im Gas folgende ist: $[O_2] + [H_2O] \leq 200$ Vol.-ppm.

**5.** Verfahren nach einem der Ansprüche 1 bis 4, **dadurch gekennzeichnet, dass** ein Brenner verwendet wird, der mit einer Elektrode aus Wolfram, Molybdän, Kupfer oder ihren Legierungen versehen ist.

**6.** Verfahren nach einem der Ansprüche 1 bis 5, **dadurch gekennzeichnet, dass** das nicht oxidierende Gas unter Argon, Stickstoff, Helium, Wasserstoff oder ihren Gemischen ausgewählt wird.

**7.** Verfahren nach einem der Ansprüche 1 bis 6, **dadurch gekennzeichnet, dass** es unter den Plasmaschneid-, Plasmaschweiß-, Markierungsschweißen, Plasmaauftragschweiß-, Plasmaprojektionsverfahren oder Verfahren der Wärmebehandlung im Plasmalichtbogen ausgewählt wird.

**8.** Verfahren nach einem der Ansprüche 1 bis 6, **dadurch gekennzeichnet, dass** es unter den TIG-Schweißverfahren ausgewählt wird.

**9.** Verfahren nach einem der Ansprüche 1 bis 7, umfassend den Schritt des Schneidens einer Struktur aus Metall oder Metalllegierung, insbesondere einer Struktur aus Stahl, rostfreiem Stahl oder Aluminium.

**10.** Nicht oxidierendes Gas, umfassend mindestens einen Bestandteil, der unter Argon, Stickstoff, Helium, Wasserstoff oder ihren Gemischen ausgewählt wird und in einem Verfahren nach einem der Ansprüche 1 bis 8 eingesetzt werden kann, **dadurch gekennzeichnet, dass** es einen Anteil von Verunreinigungen des Typs Sauerstoff von weniger als 80 Vol.-ppm und einen Anteil von Verunreinigungen des Typs Wasserdampf von weniger als 400 Vol.-ppm enthält, und dass das Verhältnis des Sauerstoffanteils zum Wasserdampfanteil im Gas folgendes ist:

$$0 \leq [O_2] / [H_2O] \leq 1/3,$$

vorzugsweise einen Anteil von Sauerstoffverunreinigungen von weniger als 15 Vol.-ppm und einen Anteil von Wasserdampfverunreinigungen von weniger als 50 Vol.-ppm.

## Claims

**1.** Electric-arc work process, in which a torch is supplied with at least one non-oxidizing gas, the said torch being provided with at least one electrode made of pure or alloyed metal, **characterized in that** the said at least one non-oxidizing gas contains a concentration of impurities of the oxygen type of less than 80 ppmv and a concentration of impurities of the water vapour type of less than 400 ppmv and **in that** the ratio of the oxygen concentration to the water vapour concentration in the gas is such that:

$$0 \leq [O_2] / [H_2O] \leq 1/3.$$

**2.** Process according to Claim 1, **characterized in that** the gas contains less than 50 ppmv of oxygen and less than 200 ppmv of water vapour, preferably less than 15 ppmv of oxygen and less than 50 ppmv of water vapour.

**3.** Process according to either of Claims 1 and 2, **characterized in that** the sum of the concentrations of oxygen impurities $[O_2]$ and water vapour impurities $[H_2O]$ in the gas is such that: $[O_2] + [H_2O] \leq 450$ ppmv.

**4.** Process according to one of Claims 1 to 3, **characterized in that** the sum of the concentrations of oxygen impurities $[O_2]$ and water vapour impurities $[H_2O]$ in the gas is such that: $[O_2] + [H_2O] \leq 200$ ppmv.

**5.** Process according to one of Claims 1 to 4, **characterized in that** a torch provided with an electrode made of tungsten, molybdenum, copper or alloys thereof is used.

**6.** Process according to one of Claims 1 to 5, **characterized in that** the non-oxidizing gas is chosen from argon, nitrogen, helium, hydrogen or mixtures thereof.

**7.** Process according to one of Claims 1 to 6, **characterized in that** it is chosen from plasma cutting, plasma welding, plasma marking, plasma surfacing, plasma spraying or plasma-arc heat treatment processes.

**8.** Process according to one of Claims 1 to 6, **characterized in that** it is chosen from TIG welding processes.

**9.** Process according to one of Claims 1 to 7 comprising an operation of cutting a metal or metal-alloy structure, especially a steel, stainless steel or aluminium structure.

**10.** Non-oxidizing gas comprising at least one component chosen from argon, nitrogen, helium, hydrogen or mixtures thereof, that can be used in a process according to one of Claims 1 to 8, **characterized in that** it contains a concentration of impurities of the oxygen type of less than 80 ppmv and a concentration of impurities of the water vapour type of less than 400 ppmv and **in that** the ratio of the oxygen concentration to the water vapour concentration in the gas is such that:

$$0 \leq [O_2] / [H_2O] \leq 1/3,$$

preferably a concentration of oxygen impurities of less than 15 ppmv and a concentration of water vapour impurities of less than 50 ppmv.

$$0 \leq [O_2] / [H_2O] \leq 1/3,$$

FIG. 1

FIG. 2

EP 0 945 207 B1

FIG. 3

FIG. 4